(19) Europäisches Patentamt
European Patent Office
Office européen des brevets

(11) **EP 1 714 862 A2**

(12) **EUROPEAN PATENT APPLICATION**

(43) Date of publication:
**25.10.2006 Bulletin 2006/43**

(51) Int Cl.:
***B62K 23/02*** (2006.01)

(21) Application number: **06006628.9**

(22) Date of filing: **29.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **29.03.2005 JP 2005093466**

(71) Applicant: **YAMAHA HATSUDOKI KABUSHIKI KAISHA**
**Iwata-shi, Shizuoka 438-8501 (JP)**

(72) Inventors:
• **Watanabe, Kenichi**
**Iwata-shi**
**Shizuoka-ken 438-8501 (JP)**

• **Hara, Nobuo**
**Iwata-shi**
**Shizuoka-ken 438-8501 (JP)**
• **Imai, Atsuhsi**
**Iwata-shi**
**Shizuoka-ken 438-8501 (JP)**

(74) Representative: **Grünecker, Kinkeldey, Stockmair & Schwanhäusser**
**Anwaltssozietät**
**Maximilianstrasse 58**
**80538 München (DE)**

(54) **Operation control device for saddle type motor vehicle**

(57) The object of the invention is to provide an operation control device for a saddle type motor vehicle that can control driving force in response to the weight shift of a rider in addition to the operation of the throttle grip. The operation control device calculates a throttle grip rotation torque element (TH') using a throttle grip rotation torque sensor (11) and a throttle grip rotation torque operator (34), and a pseudo operation degree element (TH) for a throttle grip by integration using a throttle grip pseudo opening degree operator (36). A handle load sensor (12) and a handle load operator (38) detect a handle load (FF). Right and left step load sensors (13, 14) and right and left step load operators (40, 41) detect right and left step loads (FR, FL). A weight shift element operator (42) calculates a weight shift element (F). A target throttle opening degree (THtarget) is determined in consideration of these elements, and a throttle valve is rotated by PID control.

FIG. 1

**Description**

BACKGROUND OF THE INVENTION

1. Field of the Invention

The present invention relates generally to an operation control device for a saddle type motor vehicle, and particularly to a saddle type motor vehicle controlled by a rider while the rider shifts his weight such as a motorcycle, an all terrain vehicle (ATV), a snowmobile, and a hydroplane. The invention relates more particularly to an operation control device suitably applied to a saddle type motor vehicle such as a motorcycle.

2. Description of the Related Art

In the saddle type vehicle, the rider manually operates a throttle grip provided at a handle to adjust the throttle opening degree. Unlike a four-wheel automobile in which the driver operates the accelerator pedal with the foot to adjust throttle opening degree, the weight shift of the rider greatly affects the operation.

For motorcycles, especially for offload model motorcycles, the posture of the rider is crucial when the motorcycle accelerates/decelerates or corners. During acceleration, the rider shifts his weight forward so that he can prevent the front wheel from being lifted, namely prevent unexpected "wheelie." During deceleration, the rider shifts his weight backward so that he can prevent the rear wheel from being lifted, namely prevent unexpected "jack knife." During cornering, the rider shifts his weight forward to keep the vehicle stable and prevent it from sliding sideways, increases the contact load of the front tire and enhances the grip, so that the vehicle can turn well. The weight shift is easy for experienced riders; however not easy for inexperienced riders.

A device disclosed by JP5-118237A stops traction control during deceleration in order to prevent apparent acceleration slipping that can be caused during deceleration. A device disclosed by JP11-241955A opens/closes the throttle valve in response to the rotation torque of the throttle grip so that the driving force can be raised without greatly turning the throttle grip (see Fig. 26 in the prior art documents). However, these prior art documents do not disclose anything about controlling the driving force in response to the weight shift of the rider.

SUMMARY OF THE INVENTION

It is an object of the invention to provide an operation control device for a saddle type motor vehicle that can control the driving force in response to the weight shift of the rider in addition to the operation of the throttle or the like.

An operation control device for a saddle type motor vehicle according to the invention includes an operation amount detector, a weight shift amount detector, and an output controller. The operation amount detector detects the operation amount of an operating element that allows a rider to control the output of a motor. The weight shift amount detector detects the weight shift amount or weight deviation (hereinafter representatively referred to as "weight shift amount") of the rider. The output controller controls the output of the motor in response to the operation amount detected by the operation amount detector and the weight shift amount detected by the weight shift amount detector.

Herein, the motor includes an engine and an electric motor. In order to control the output of an engine, for example the amount of intake air may be adjusted by opening/closing a throttle valve or the fuel injection amount may be adjusted. In order to control the output of an electric motor, voltage and/or current supplied to the electric motor may be adjusted. If an engine is used as the motor, the operating element is a throttle. If an electric motor is used as the motor, the operating element is an accelerator.

Using the operation control device, the operation amount of the operating element by the rider and the weight shift of the rider are detected. The output of the motor is controlled in response to both the detected operation amount of the operating element and the detected weight shift. Therefore, in the motor vehicle including the operation control device, the driving force can be controlled not only by the operation of the operating element by the rider but also by the weight shift of the rider.

The output controller preferably raises the output of the motor as the weight of the rider shifts toward the front of the vehicle and lowers the output of the motor as the weight of the rider shifts toward the rear of the vehicle. In this way, as the rider shift his weight forward, the driving force is raised, while as the rider shift his weight backward, the driving force is lowered, so that stable driving is enabled.

The operation amount detector preferably includes a rotation torque detector detecting the rotation torque of a throttle grip. In this way, the output of the motor is controlled in response to the rotation torque of the throttle grip.

The operation amount detector preferably further includes a pseudo opening degree operator integrating the rotation torque detected by the rotation torque detector over time to get the pseudo opening degree of the throttle grip. In this way, if the opening degree of the throttle grip is not detected, it may be calculated by integration with the rotation torque of the throttle grip. Consequently, the output of the motor is controlled in response not only to the rotation torque of the throttle grip but also to the pseudo opening degree of the throttle grip.

The operation amount detector preferably includes an opening degree detector detecting the opening degree of the throttle grip. In this way, the output of the motor is controlled in response to the opening degree of the throttle grip.

The operation amount detector preferably further includes a rotation torque operator differentiating the opening degree of the throttle grip detected by the opening degree detector over time to get the rotation torque of the throttle grip. In this way, if the rotation torque of the throttle grip is not detected, it may be calculated by differentiation with the opening degree of the throttle grip. Consequently, the output of the motor can be controlled in response not only to the opening degree of the throttle grip but also to the rotation torque of the throttle grip.

The weight shift amount detector preferably includes a handle load detector, a step load detector, and a weight shift element operator. The handle load detector detects a load imposed on a handle. The step load detector detects a load imposed on a footstep. The weight shift element operator calculates the difference between the load detected by the handle load detector and the load detected by the step load detector. In this way, the weight shift of the rider can be detected based on the balance between the load imposed on the handle and the load imposed on the footstep.

The operation control device for a saddle type motor vehicle preferably further includes a front wheel speed detector, a rear wheel speed detector, and a traction control element operator. The front wheel speed detector detects the speed of the motor vehicle based on the rotation speed of a front wheel. The rear wheel speed detector detects the speed of the motor vehicle based on the rotation speed of a rear wheel. The traction control element operator calculates the difference between the speed detected by the front wheel speed detector and the speed detected by the rear wheel speed detector. The output controller raises the output of the motor as the speed detected by the front wheel speed detector becomes higher than the speed detected by the rear wheel speed detector and lowers the output of the motor as the speed detected by the front wheel speed detector becomes lower than the speed detected by the rear wheel speed detector. In this way, the output of the motor is controlled in response not only to the weight shift amount but also to the speed difference between the front and rear wheels, in other words, so·called traction control is enabled. Consequently, the front and rear wheels are less likely to slip, and grip driving is enabled.

The operation control device for a saddle type motor vehicle preferably further includes a steering angle detector detecting a steering angle. The output controller raises the output of the motor as the steering angle detected by the steering angle detector increases and lowers the output of the motor as the steering angle decreases. In this way, the output of the motor is controlled in response not only to the weight shift amount but also to the steering angle. Consequently, stable cornering is enabled.

BRIEF DESCRIPTION OF THE DRAWINGS

Fig. 1 is a functional block diagram of the configuration of an operation control device according to a first embodiment of the invention;
Fig. 2 is a side view of a motorcycle showing the mounting position of the operation control device shown in Fig. 1;
Fig. 3 is a functional block diagram of the content of operation processing by a CPU in Fig. 1;
Fig. 4 is a sectional view of a throttle grip rotation torque sensor in Figs. 1 to 3;
Fig. 5 is a sectional view of a handle load sensor in Figs. 1 to 3;
Fig. 6 is a perspective view of a footstep showing the mounting position of a right or left step load sensor in Figs. 1 to 3;
Fig. 7 is a side view of a rear wheel showing the mounting position of a rear wheel speed sensor in Figs. 1 to 3;
Fig. 8 is a top view of a handle showing the mounting position of a steering angle sensor in Figs. 1 to 3;
Fig. 9A is a front view of a throttle driving mechanism in the operation control device in Figs. 1 to 3;
Fig. 9B is a side view of a throttle position sensor in Fig. 9A;
Fig. 9C is a side view of an electric motor in Fig. 9A;
Fig. 10 is a graph representing the characteristic of mapping operation used in the operation control device according to a second embodiment of the invention; and
Fig. 11 is a functional block diagram of the content of operation processing by a CPU in the operation control device according to a third embodiment of the invention.

DETAILED DESCRIPTION OF THE PREFERRED EMBODIMENTS

Now, embodiments of the invention will be described in conjunction with the accompanying drawings, in which like numbers reference like portions and their description will not be repeated.

[First Embodiment]

[Structure of Operation Control Device]

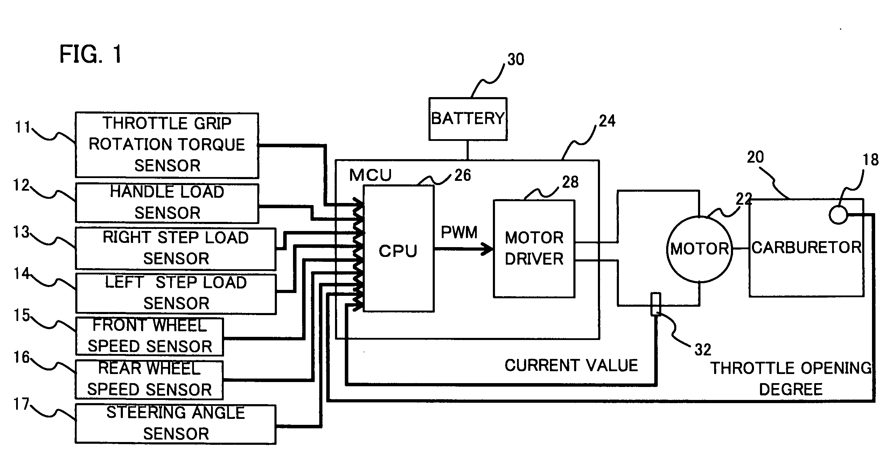

Referring to Fig. 1, an operation control device according to a first embodiment of the invention includes various kinds of sensors 11 to 18 mounted to a motorcycle, an electric motor 22 that rotates the throttle valve of a carburetor 20, and an MCU (Motor Control Unit) 24 that controls the electric motor 22 in response to the output signals of the sensors 11 to 18.

The MCU 24 includes a CPU (Central Processing Unit) 26 that produces a PWM (Pulse Width Modulation) signal based on the output signals of the sensors 11 to 18, and a motor driver 28 that drives the electric motor 22 in response to the PWM signal. The MCU 24 is connected to a battery 30 and supplied with power.

A current sensor 32 inserted to an interconnection for the electric motor 22 detects the value of current passed through the electric motor 22 and feeds back the data to the CPU 26. In this way, the MCU 24 carries out PID (Proportional Integral Differential) control to the electric motor 22.

The sensors provided to detect the state of the vehicle are a throttle grip rotation torque sensor 11, a handle load sensor 12, a right step load sensor 13, a left step load sensor 14, a front wheel speed sensor 15, a rear wheel speed sensor 16, a steering angle sensor 17, and a throttle position sensor 18.

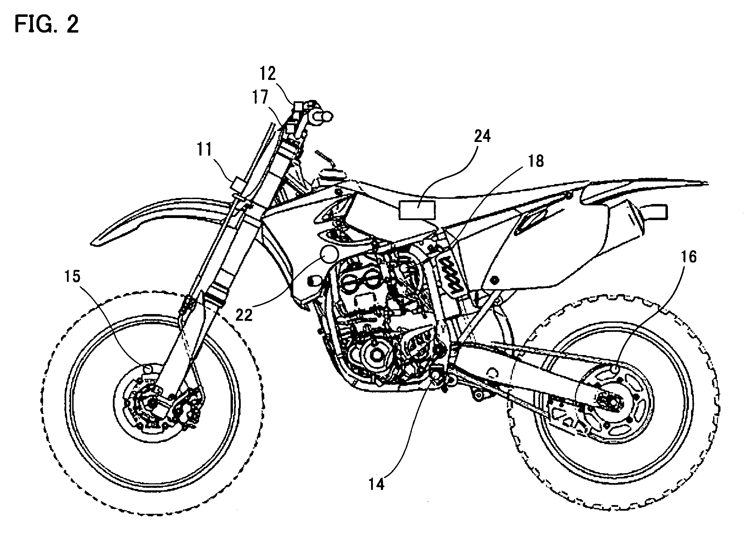

Referring to Fig. 2, the throttle grip rotation torque sensor 11 is mounted at the front of a front suspension and detects the rotation torque imposed on the throttle grip. The handle load sensor 12 is mounted to the handle and detects the load of the rider imposed on the handle (hereinafter referred to as "handle load"). The right step load sensor 13 is mounted to the right footstep and detects the load of the rider imposed on the right footstep (hereinafter referred to as "right step load"). The left step load sensor 14 is mounted to the left footstep and detects the load of the rider imposed on the left footstep (hereinafter referred to as "left step load"). The front wheel speed sensor 15 is mounted near the shaft of the front wheel and detects the speed of the front wheel. The rear wheel speed sensor 16 is mounted near the shaft of the rear wheel and detects the speed of the rear wheel. The steering angle sensor 17 is mounted to the handle post and detects the steering angle (rotation angle of the handle). The throttle position sensor 18 is mounted to the carburetor 20 and detects the position of the throttle valve (throttle opening degree). The MCU 24 is accommodated under the seat.

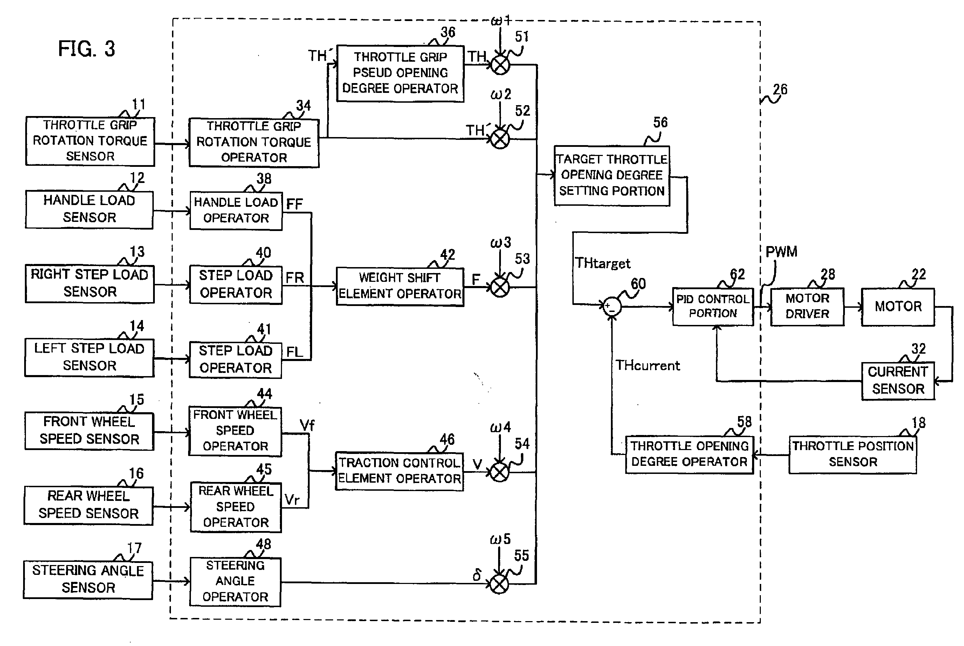

Referring to Fig. 3, the CPU 26 carries out a computer program and implements a throttle grip rotation torque operator 34, a throttle grip pseudo opening degree operator (hereinafter simply as "pseudo opening degree operator") 36, a handle load operator 38, a right step load operator 40, a left step load operator 41, a weight shift element operator 42, a front wheel speed operator 44, a rear wheel speed operator 45, a traction control element operator 46, a steering angle operator 48, weight coefficient multipliers 51 to 55, a target throttle opening degree setting unit 56, a throttle opening degree operator 58, a subtracter 60, and a PID controller 62.

The throttle grip rotation torque operator 34 calculates a rotation torque element for throttle grip TH' (a value proportional to the rotation torque of the throttle grip) based on the output signal of the throttle grip rotation torque sensor 11. The pseudo opening degree operator 36 integrates the calculated throttle grip rotation torque element (hereinafter simply as "rotation torque element") TH' over time to get a pseudo opening degree element for throttle grip (hereinafter simply as "pseudo opening degree element") TH. The throttle grip employed according to the invention allows even a slight amount of its rotation to be detected. The pseudo opening degree herein refers to an opening degree that would be obtained by a general throttle grip.

The handle load operator 38 calculates a handle load FF based on the output signal of the handle load sensor 12. The right step load operator 40 calculates the right step load FR based on the output signal of the right step load sensor 13. The left step load sensor 41 calculates a left step load FL based on the output signal of the left step load sensor 14. The weight shift element operator 42 calculates a weight shift element F based on these calculated handle load FF, right step load FR, and left step load FL according to the following Expression (1):

$$F = \frac{FF - (FR + FL)}{FF + (FR + FL)} \qquad \qquad ...(1)$$

As can clearly be understood from Expression (1), the weight shift element F is the ratio of the load imposed on the handle in the total load imposed on the handle and footsteps. Therefore, when the weight of the rider is shifted from the rear to the front of the motorcycle, the weight shift element F increases, while when the weight of the rider is shifted from the front side to the rear side, the weight shift element F decreases.

The front wheel speed operator 44 calculates a front wheel speed Vf based on the output signal of the front wheel speed sensor 15. The front wheel speed Vf is the speed of the vehicle calculated based on the rotation speed of the front wheel. The rear wheel speed operator 45 calculates a rear wheel speed Vr based on the output signal of the rear wheel speed sensor 16. The rear wheel speed Vr is the speed of the vehicle calculated based on the rotation speed of the rear wheel. The traction control element operator 46 calculates a traction control element V based on the front wheel speed Vf and the rear wheel speed Vr according the following Expression (2):

$$V = Vf - Vr \qquad\qquad ...(2)$$

As can clearly be understood from Expression (2), the traction control element V is produced by subtracting the rear wheel speed Vr from the front wheel speed Vf. Therefore, if the rotation speed of the rear wheel (driving wheel) is too high during acceleration, and the rear wheel starts to slip, the traction control element V decreases, while if the rotation speed of the rear wheel is too low during deceleration, and the rear wheel starts to slip, the traction control element V increases.

The steering angle operator 48 calculates a steering angle $\delta$ based on the output signal of the steering angle sensor 17.

A weight coefficient multiplier 51 multiplies the pseudo opening degree element TH by a prescribed weight coefficient w1. A weight coefficient multiplier 52 multiplies the calculated rotation torque element TH' by a prescribed w2. A weight coefficient multiplier 53 multiplies the calculated weight shift element F by a prescribed weight coefficient w3. A weight coefficient multiplier 54 multiplies the calculated traction control element V by a prescribed weight coefficient w4. A weight coefficient multiplier 55 multiplies the calculated steering angle (cornering assisting element) $\delta$ by a prescribed weight coefficient w5. The weight coefficients w1 to w5 are suitably set depending on the characteristics of the vehicle to which the operation control device is mounted.

A target throttle opening degree setting unit 56 calculates the total sum of all the weighted elements and thus produces a target throttle opening degree THtarget according to the following Expression (3).

$$THtarget = w1{\times}TH + w2{\times}TH' + w3{\times}F + w4{\times}V + w5{\times}\delta$$
$$...(3)$$

Meanwhile, the throttle opening degree operator 58 calculates the current throttle opening degree THcurrent based on the output signal of a throttle position sensor 18. The subtracter 60 subtracts the current throttle opening degree THcurrent from the target throttle opening degree THtarget to produce the difference. The PID controller 62 carries out PID control based on the calculated difference in the throttle opening degree (THtarget-THcurrent) and the fed back current value of the electric motor 22 and produces the PWM signal to control the electric motor 22.

[Structure of Throttle Grip Rotation Torque Sensor]

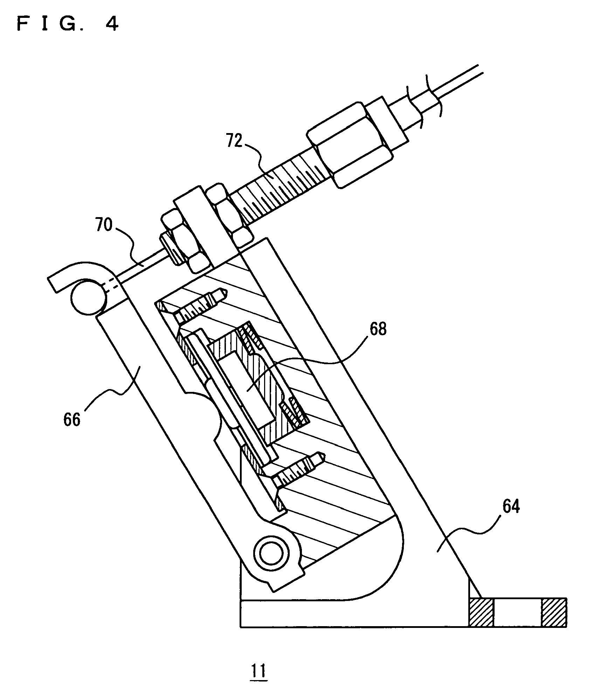

Referring to Fig. 4, the throttle grip rotation torque sensor 11 includes a base 64 attached to the main body of the motorcycle, a link 66 pivotably supported by the base 64, and a load cell 68 buried in the base 64.

Two such throttle grip rotation torque sensors 11 are mounted in the front of the front suspension. A throttle wire 70 extended from the pulling side of the throttle grip is suspended at the tip end of the link 66 in one of the throttle grip rotation torque sensors 11, and the throttle wire 70 extended from the return side is suspended at the tip end of the link 66 in the other throttle grip rotation torque sensor 11. The tension of the throttle wire 70 can be adjusted by an adjuster volt 72.

When the tension of the throttle wire 70 increases, the rotation torque of the link 66 toward the load cell 68 increases, which increases the load imposed on the load cell 68. Meanwhile, when the tension of the throttle wire 70 decreases, the rotation torque of the link 66 toward the load cell 68 decreases, which reduces the load imposed on the load cell 68.

Therefore, when the rider turns the throttle grip to the own side, the output signal of the load cell 68 in the throttle grip rotation torque sensor 11 connected with the throttle wire 70 on the pulling side increases, while the output signal of the load cell 68 in the throttle grip rotation torque sensor 11 connected with the throttle wire 70 on the return side is reduced.

When the rider turns the throttle grip ahead, the output signal of the load cell 68 in the throttle grip rotation torque sensor 11 connected with the throttle wire 70 on the pulling side decreases, while the output signal of the load cell 68 in the throttle grip rotation torque sensor 11 connected with the throttle wire 70 on the return side increases. The output signals of these two road cells 68 are applied to the inverted input terminal and the non-inverted input terminal of a differential amplifier (not shown) and amplified about 10000 times and transmitted to the MCU 24.

[Structure of Handle Load Sensor]

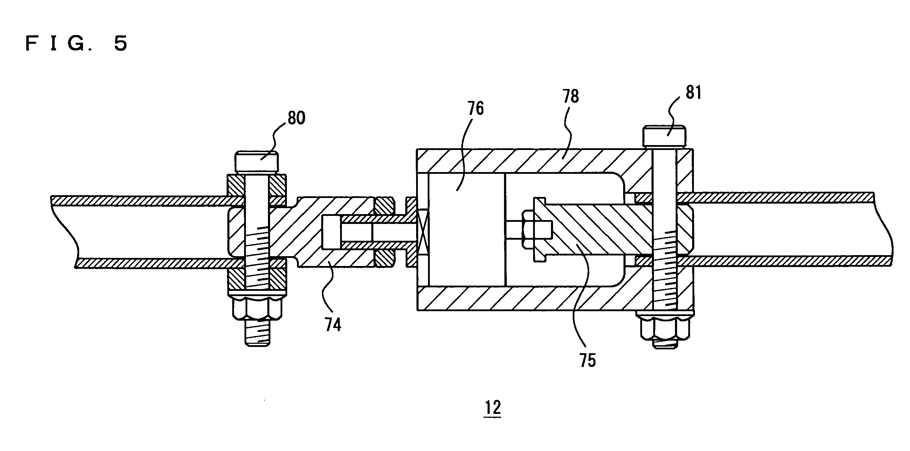

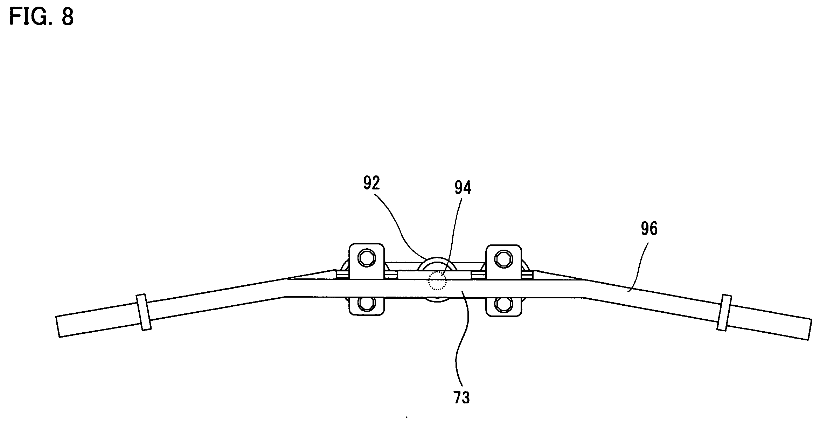

Referring to Fig. 5, as the handle load sensor 12 is inserted into a bridge (reference number 73 in Fig. 8) that spans between the right and left of the handle. The handle load sensor 12 more specifically includes inner collars 74 and 75 and a load cell 76 held between the inner collars 74 and 75, and a case 78 used to fix the load cell 76. The left inner collar 74 is fixed with the left part of the handle by a bolt 80 and the right inner collar 75 is fixed with the right part of the handle with a bolt 81.

When the load of the rider imposed on the handle increases, tensile stress is generated at the bridge, and the load imposed on the load cell 76 decreases. When the load of the rider imposed on the handle decreases, compressive stress is generated at the bridge, and the load imposed on the load cell 76 increases. The output signal of the load cell 76 is amplified by an amplifier (not shown) and transmitted to the MCU 24.

[Structure of Step Load Sensor]

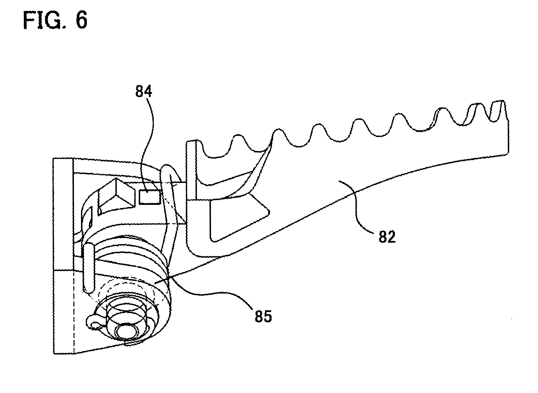

Referring to Fig. 6, the right or left step load sensor 13 or 14 includes strain gauges 84 and 85 attached to the base of the footstep 82. The strain gauge 84 is attached to the upper surface of the base and the strain gauge 85 is attached to the lower surface of the base.

When the load of the rider imposed on the footstep 82 increases, bending stress generated at the base of the footstep 82 increases, which increases the tensile stress detected by the upper surface strain gauge 84 and increases the compressive stress detected by the lower surface strain gauge 85. When the load of the rider imposed on the footstep 82 decreases, the bending stress generated at the base of the footstep 82 decreases, which reduces the tensile stress detected by the upper surface strain gauge 84 and reduces the compressive stress detected by the lower surface strain gauge 85. The strain gauges 84 and 85 are incorporated in a bridge circuit (not shown), and their output signals are amplified by an amplifier (not shown) and transmitted to the MCU 24.

In this example, the load imposed on the footstep 82 is detected by the strain gauge 84, while it may be detected by a sensor using a load cell similarly to the throttle grip rotation torque sensor 11 and the handle load sensor 12.

[Structure of Speed Sensor]

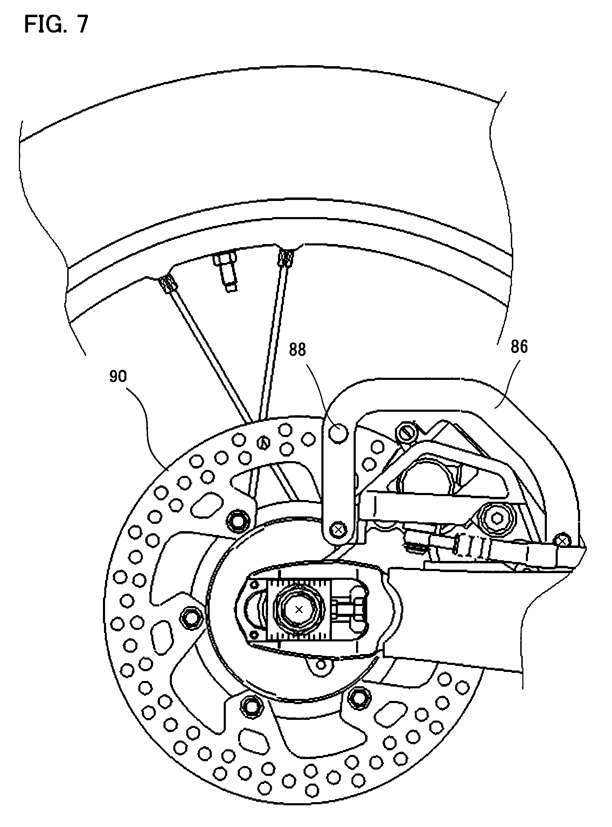

Referring to Fig. 7, the rear wheel speed sensor 16 includes a stay 86 mounted to the main body of the motorcycle and a proximity switch 88 fixed to the stay 86. The proximity switch 88 outputs a pulse signal when a magnetic material comes in its proximity and is provided a prescribed distance apart from a rear brake disk 90. The output signal of the proximity switch 88 is amplified by an amplifier (not shown) and transmitted to the MCU 24.

Therefore, the number of holes in the rear brake disk 90 is counted by the proximity switch 88, and the rotation speed of the rear wheel can be calculated based on the result. Note that the front wheel speed sensor 15 has the same structure.

[Structure of Steering Angle Sensor]

Referring to Fig. 8, the steering angle sensor 17 includes a potentiometer 94 buried in the handle post 92. The shaft of the potentiometer 94 is fixed with the rotation shaft of the handle 96. Therefore, when the rider turns the handle 96 to the right or left, the shaft of the potentiometer 94 is turned together with the movement. The output signal of the potentiometer 94 is amplified by an amplifier (not shown) and transmitted to the MCU 24. Note that a bridge 73 spans the handle 96 and the handle load sensor 12 shown in Fig. 5 is inserted in the bridge 73.

[Structure of Throttle Driving Mechanism]

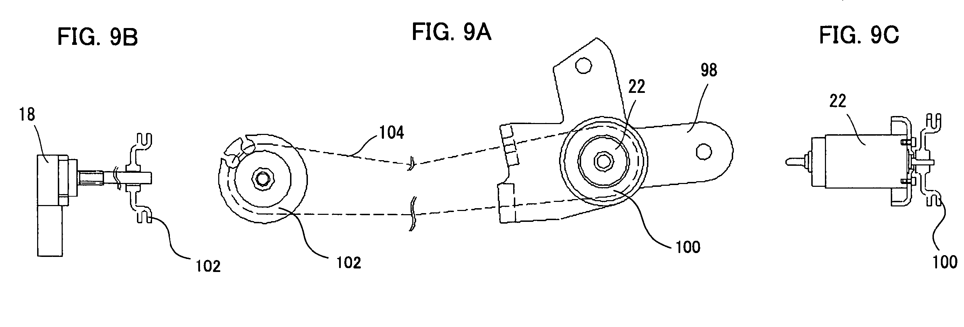

Referring to Figs. 9A to 9C, the electric motor 22 is fixed to the stay 98 attached to the vehicle body. A pulley 100 is mounted to the shaft of the electric motor 22, and a pulley 102 is mounted to the shaft of the throttle position sensor 18. A wire 104 runs between the pulleys 100 and 102, and the tension of the wire 104 is adjusted by an adjuster bolt (not shown). The shaft of the throttle position sensor 18 is coupled with the shaft to rotate the throttle valve of the carburetor 20.

When the electric motor 22 is driven, the pulley 100 is rotated, and the pulley 102 is rotated through the wire 104, so that the throttle valve of the carburetor 20 is rotated. The position of the throttle valve is detected by the throttle position sensor 18.

In this example, the pulley 100 is directly mounted to the electric motor 22, while a reduction gear that reduces the speed of the electric motor 22 may be provided therebetween.

[Operation of Operation Control Device]

The above-described operation control device operates as follows.

The throttle grip rotation torque sensor 11 and the throttle grip rotation torque operator 34 detect the rotation torque of the throttle grip, so that the rotation torque element TH' is obtained. The rotation torque element TH' is integrated by the pseudo opening degree operator 36, and the pseudo opening degree element TH is produced accordingly.

Therefore, when the rider tries to turn the throttle grip toward the own side (turns it little in the direction to open the throttle), the pseudo opening degree element TH and the rotation torque element TH' both increase, which contributes to increase in the target throttle opening degree THtarget. Conversely, when the rider tries to turn the throttle grip ahead (turns it little in the direction to close the throttle), the pseudo opening degree element TH and the rotation torque element TH' both decrease, which contributes to decrease in the target throttle opening degree THtarget.

The handle load FF is detected by the handle load sensor 12 and the handle load operator 38, and the right and left step load sensors 13 and 14 and the right and left step load operators 40 and 41 detect the right and left step loads FR and FL. The weight shift element operator 42 calculates the weight shift element F, so that the weight shift of the rider is detected.

When the rider shifts his weight forward, the weight shift element F increases, which contributes to increase in the target throttle opening degree THtarget. Conversely, when the rider shifts his weight backward, the weight shift element F decreases, which contributes to decrease in the target throttle opening degree THtarget.

The front wheel speed sensor 15 and the front wheel speed operator 44 detect the front wheel speed Vf, and the rear wheel speed sensor 16 and the rear wheel speed operator 45 detect the rear wheel speed Vr. The traction control element operator 46 calculates the difference between the front wheel speed Vf and the rear wheel speed Vr, so that the traction control element V is calculated.

Therefore, when the front wheel speed Vf becomes higher than the rear wheel speed Vr during deceleration, the traction control element V increases, which contributes to increase in the target throttle opening THtarget. Conversely, when the rear wheel speed Vr becomes higher than the front wheel speed Vf during acceleration, the traction control element V decreases, which contributes to decrease in the target throttle opening degree THtarget.

The steering angle sensor 17 and the steering angle operator 48 detect a steering angle $\delta$. The steering angle $\delta$ takes a value other than zero during cornering, and the value increases as the turning radius decreases. Therefore, smaller turning radii contribute more to increase in the target throttle opening angle THtarget. Conversely, larger turning radii contribute more to decrease in the target throttle angle opening degree THtarget.

The various kinds of elements (TH, TH', F, V, and $\delta$) are weighted by the weight coefficients 51 to 55, and the target throttle opening degree setting unit 56 determines the target throttle opening degree THtarget. These various kinds of elements described above are reflected on the target throttle opening degree THtarget.

If the target throttle opening degree THtarget is greater or smaller than the current throttle opening degree THcurrent, the electric motor 22 is driven until the difference becomes zero, and the throttle valve of the carburetor 20 is opened/closed. In this example, since the PID control is carried out, the current throttle opening degree THcurrent is immediately converged to the target throttle opening degree THtarget.

[Effect of First Embodiment]

According to the above described operation control device, the throttle opening degree is controlled not only by the throttle work by the rider but also by the weight shift by the rider. The forward weight shift of the rider moves the throttle in its opening direction, and the backward weight shift of the rider moves the throttle in its closing direction. Therefore, when the rider does not shift his weight suitably depending on the state of riding, the driving force is reduced, which can encourage the rider to more positively shift his weight. If for example the rider tries to accelerate while he still leans back, the acceleration may not be carried out.

The traction control is also carried out, and therefore grip driving can be achieved. The throttle opening degree is controlled also based on the steering angle, and therefore stable cornering can be achieved.

As in the foregoing, an inexperienced rider can automatically be assisted by the motorcycle in throttle work that would otherwise be difficult for the rider, and therefore even the beginner rider can stably drive. The rider can learn weight shift appropriate for various driving states interactively, so that the rider can improve his riding skills for a short period of time.

[Second Embodiment]

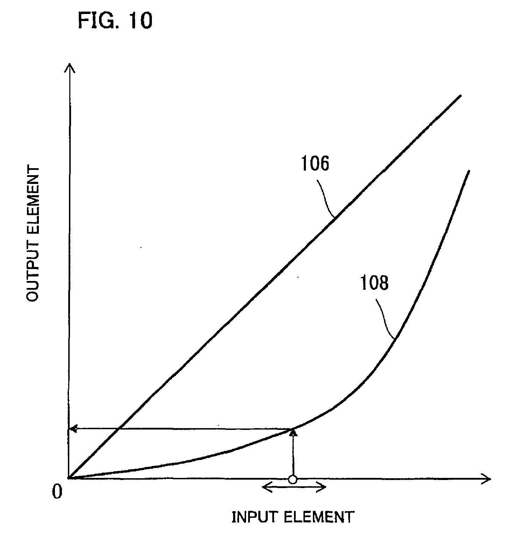

According to the first embodiment, the each element is multiplied by a constant weight coefficient, while each element may be multiplied by a weight coefficient varying depending on the value of an input element, namely mapping operation may be carried out. In the graph in Fig. 10, the abscissa represents the value of the input element before mapping operation and the ordinate represents the value of the output element after mapping operation. When a constant weight coefficient is multiplied, the value of the output element is in proportion to the input element (see reference number 106 in Fig. 10). In contrast, in mapping operation, a weight coefficient varying depending on the value of the input element is multiplied, and therefore the value of the output element is not in proportion to the input element and varies according to a predetermined function (see reference number 108 in Fig. 10). In this example, as the input element increases, the weight coefficient to be multiplied increases. Note that multiplication by the weight coefficients according to the first embodiment may entirely or only partly be replaced by mapping operation.

[Third Embodiment]

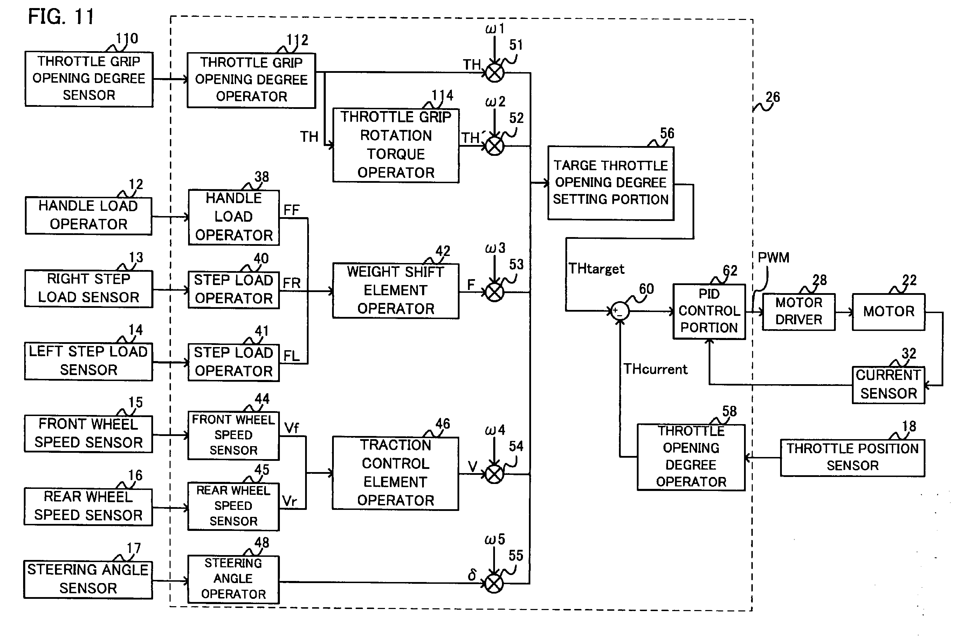

The throttle grip employed according to the first embodiment allows its torque to be detected based on even a slight amount of its rotation, and this is why the throttle grip rotation torque sensor 11, the throttle grip rotation torque operator 34, and the pseudo opening degree operator 36 are used. However, if a normal throttle grip is used, as shown in Fig. 11, a throttle grip opening degree sensor 110, a throttle grip opening degree operator 112, and a throttle grip rotation torque operator 114 may be used instead of the above-described elements.

The throttle grip opening degree sensor 110 is mounted to the throttle grip to detect the opening degree of the throttle grip. The throttle grip opening degree operator 112 calculates a throttle grip opening degree element TH (a value proportional to the opening degree of the throttle grip) based on the output signal of the throttle grip opening degree sensor 110. The throttle grip rotation torque operator 114 differentiates the calculated throttle grip opening degree element TH over time to get the throttle grip rotation torque element TH' (a value proportional to the rotation torque of the throttle grip).

[Other Embodiments]

In the above described embodiments, the opening degree and the rotation torque of the throttle grip are both taken into account as elements based on which the throttle opening degree is determined, while only one of them may be considered.

According to the above described embodiments, the weight shift is detected based on the balance between the load imposed on the handle and the load imposed on the footsteps, while the weight shift may be detected based on the balance between the stroke amount of the front suspension and the stroke amount of the rear suspension.

According to the above described embodiments, the speeds of the front and rear wheels is detected as the traction control elements, and the steering angle is detected as the cornering assisting element, while these elements do not have to be considered. Alternatively, other elements not mentioned above may be taken into account.

As in the foregoing, although the embodiments of the invention have been described and illustrated in detail, it is clearly understood that the same is by way of illustration and example only. The invention is not limited by the above-described embodiments and may be embodied in various modified forms without departing from the sprit and scoped of the invention.

**Claims**

1. An operation control device for a saddle type motor vehicle, comprising:

   operation amount detecting means (11, 36, 110, 114) for detecting the operation amount of an operating element that allows a rider to control the output of a motor;
   weight shift amount detecting means (12, 13, 14, 42) for detecting the weight shift amount of the rider; and
   output control means (28, 32) for controlling the output of the motor in response to the operation amount of the operating element detected by said operation amount detecting means and the weight shift amount detected by said weight shift amount detecting means.

2. The operation control device according to claim 1, wherein said output control means raises the output of the motor as the weight of the rider shifts toward the front of the vehicle and lowers the output of the motor as the weight of the rider shifts toward the rear of the vehicle.

**3.** The operation control device according to claim 1, wherein said operation amount detecting means comprises rotation torque detecting means (11) for detecting the rotation torque of a throttle grip.

**4.** The operation control device according to claim 3, wherein said operation amount detecting means further comprises pseudo opening degree operation means (36) for integrating the rotation torque detected by said rotation torque detecting means over time to get the pseudo opening degree of the throttle grip.

**5.** The operation control device according to claim 1, wherein said operation amount detecting means comprises opening degree detecting means (110) for detecting the opening degree of the throttle grip.

**6.** The operation control device according to claim 5, wherein said operation amount detecting means further comprises rotation torque operation means (114) for differentiating the opening degree of the throttle grip detected by said opening degree detecting means over time to get the rotation torque of the throttle grip.

**7.** The operation control device according to claim 1, wherein said weight shift amount detecting means comprises:

handle load detecting means (12) for detecting a load imposed on a handle;
step load detecting means (13, 14) for detecting a load imposed on a footstep; and
weight shift element operation means (42) for calculating the difference between the load detected by said handle load detecting means and the load detected by said step load detecting means.

**8.** The operation control device according to claim 1, further comprising:

front wheel speed detecting means (15) for detecting the speed of the motor vehicle based on the rotation speed of a front wheel;
rear wheel speed detecting means (16) for detecting the speed of the motor vehicle based on the rotation speed of a rear wheel; and
traction control element operation means (46) for calculating the difference between the speed detected by said front wheel speed detecting means and the speed detected by said rear wheel speed detecting means, wherein said output control means raises the output of the motor as the speed detected by said front wheel speed detecting means becomes higher than the speed detected by said rear wheel speed detecting means and lowers the output of the motor as the speed detected by said front wheel speed detecting means becomes lower than the speed detected by said rear wheel speed detecting means.

**9.** The operation control device according to claim 1, further comprising steering angle detecting means (17) for detecting a steering angle, wherein said output control means raises the output of the motor as the steering angle detected by said steering angle detecting means increases and lowers the output of the motor as the steering angle decreases.

**10.** A saddle type motor vehicle having the operation control device according to one of claims 1 to 9.

**11.** An operation control method for a saddle type motor vehicle, executable by the operation control device according to one of claims 1 to 9.

**12.** A computer program product for enabling a computer to execute the operation control method according to claim 11.

FIG. 1

THROTTLE GRIP ROTATION TORQUE SENSOR — 11
HANDLE LOAD SENSOR — 12
RIGHT STEP LOAD SENSOR — 13
LEFT STEP LOAD SENSOR — 14
FRONT WHEEL SPEED SENSOR — 15
REAR WHEEL SPEED SENSOR — 16
STEERING ANGLE SENSOR — 17

BATTERY — 30

MCU — 24
CPU — 26
MOTOR DRIVER — 28
PWM
MOTOR — 22
CARBURETOR — 20
18
CURRENT VALUE
32
THROTTLE OPENING DEGREE

EP 1 714 862 A2

10

FIG. 2

## FIG. 3

THROTTLE GRIP
ROTATION TORQUE
SENSOR `11`

THROTTLE GRIP
ROTATION TORQUE
OPERATOR `34`

THROTTLE GRIP
PSEUD OPENING
DEGREE OPERATOR `36`

TH′

TH

$\omega 1$ `51`

$\omega 2$ `52`

TH″

HANDLE LOAD
SENSOR `12`

HANDLE LOAD
OPERATOR `38`

FF

TARGET THROTTLE
OPENING DEGREE
SETTING PORTION `56`

`26`

RIGHT STEP LOAD
SENSOR `13`

STEP LOAD
OPERATOR `40`

FR

WEIGHT SHIFT
ELEMENT OPERATOR `42`

F

$\omega 3$ `53`

THtarget

`60`

PID CONTROL
PORTION `62`

PWM

MOTOR
DRIVER `28`

MOTOR `22`

LEFT STEP LOAD
SENSOR `14`

STEP LOAD
OPERATOR `41`

FL

FRONT WHEEL
SPEED SENSOR `15`

FRONT WHEEL
SPEED
OPERATOR `44`

Vf

TRACTION CONTROL
ELEMENT OPERATOR `46`

V

$\omega 4$ `54`

THcurrent

CURRENT
SENSOR `32`

REAR WHEEL
SPEED SENSOR `16`

REAR WHEEL
SPEED
OPERATOR `45`

Vr

THROTTLE OPENING
DEGREE OPERATOR `58`

THROTTLE POSITION
SENSOR `18`

STEERING ANGLE
SENSOR `17`

STEERING
ANGLE
OPERATOR `48`

$\delta$

$\omega 5$ `55`

EP 1 714 862 A2

F I G. 4

11

FIG. 5

EP 1 714 862 A2

FIG. 6

FIG. 7

FIG. 8

FIG. 9B

FIG. 9A

FIG. 9C

18

102

104

22

98

102

100

22

100

18

EP 1 714 862 A2

FIG. 10

EP 1 714 862 A2

## FIG. 11

THROTTLE GRIP OPENING DEGREE SENSOR — 110

THROTTLE GRIP OPENING DEGREE OPERATOR — 112

THROTTLE GRIP ROTATION TORQUE OPERATOR — 114

TARGE THROTTLE OPENING DEGREE SETTING PORTION — 56

HANDLE LOAD OPERATOR — 12

HANDLE LOAD OPERATOR — 38

RIGHT STEP LOAD SENSOR — 13

STEP LOAD OPERATOR — 40

LEFT STEP LOAD SENSOR — 14

STEP LOAD OPERATOR — 41

WEIGHT SHIFT ELEMENT OPERATOR — 42

FRONT WHEEL SPEED SENSOR — 15

FRONT WHEEL SPEED SENSOR — 44

REAR WHEEL SPEED SENSOR — 16

REAR WHEEL SPEED SENSOR — 45

TRACTION CONTROL ELEMENT OPERATOR — 46

STEERING ANGLE SENSOR — 17

STEERING ANGLE OPERATOR — 48

PID CONTROL PORTION — 62

MOTOR DRIVER — 28

MOTOR — 22

CURRENT SENSOR — 32

THROTTLE OPENING DEGREE OPERATOR — 58

THROTTLE POSITION SENSOR — 18

26

$\omega 1$ — 51

$\omega 2$ — 52

$\omega 3$ — 53

$\omega 4$ — 54

$\omega 5$ — 55

60

TH, TH´, FF, FR, FL, F, Vf, Vr, V, δ

THtarget, THcurrent, PWM

20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 5118237 A

• JP 11241955 A